# EUROPEAN PATENT SPECIFICATION

(11) **EP 1 595 188 B1**
(45) Date of publication and mention of the grant of the patent: **22.11.2006**
(21) Application number: 03710223.3
(22) Date of filing: 18.02.2003
(51) Int. Cl.: G05D 23/02, F16K 35/06

(54) **THERMOSTATIC HEAD**
THERMOSTATKOPF
TETE THERMOSTATIQUE

(43) Date of publication of application: 16.11.2005
(73) Proprietor: I.V.A.R. S.P.A., 25080 Prevalle (IT)
(72) Inventor: BERTOLOTTI, Umberto, I-25080 Prevalle (IT)
(74) Representative: Galassi, Alessandro
(86) International application number: PCT/IT2003/000088
(87) International publication number: WO 2004/074956

(56) References cited:
- EP-A- 0 094 372
- EP-A- 0 694 722
- GB-A- 1 564 047
- US-A- 4 176 786
- US-A- 6 164 330

## Description

The present invention relates to a thermostatic head and more in particular to a safety thermostatic head, i.e. equipped with a blocking device preventing its tampering, both unintentional and intentional.

Thermostatic heads are devices used for controlling other devices according to the value of a thermal signal detected by said head: a typical example of their use is in heating hydraulic systems, where said thermostatic head controls a shutter placed in a pipe portion of the system (for instance in a radiator) for regulating the flow rate of hot water getting through said pipe.

For convenience's sake the invention shall be described with reference to such kind of thermostatic head, although it will be easy for a skilled technician to transfer said invention to any other kind of thermostatic head starting from said description.

Thermostatic heads for hydraulic systems are well known: they substantially comprise a tubular body housing a thermostatic motor (or thermostat), which can be equipped with its own heat sensor, or it can be connected to a separate sensor for detecting the temperature of the system, or room temperature, or furthermore it can be connected to a central control system.

According to the aforesaid detection the thermostatic motor moves a stem connected to the shutter, which varies the opening of said shutter, and therefore the water flow in the duct, following the indications given by the sensor or by the central control system.

Thermostatic heads generally have a turnable control knob for rotating the aforesaid tubular body in a plurality of different operating angular positions with respect to the shutter, so as to establish the maximum water flow rate the thermostat can define.

Thermostatic heads of this type have some drawbacks: first of all, it may happen that the position set by the knob is changed by a rotation of said knob, either unintentional or intentional, particularly when the thermostatic head is placed in public places and can be touched and moved by people present in said places.

It is already known about solutions aiming at preventing an unwanted rotation of the knob, when it should be avoided that the set value can be changed. However, such known solutions do not solve the problem in an efficient and satisfactory way.

A first solution consists in providing a covering cage around the thermostatic head, which is of little convenience, anti-aesthetical and not safe enough.

A second solution consists in introducing into the thermostatic head a blocking pin which blocks or limits the rotation of the knob.

This solution is uncomfortable, expensive and complex to be used, since it requires a partial disassembly of the thermostatic head for acting upon the blocking pin, i.e. it requires the intervention of skilled personnel whenever the position of the knob has to be changed.

It is also known about "visible" blocking systems, associated outside to the thermostatic head, but neither do these solve the problem of providing a safe block, and simultaneously easy to be moved, though accessible only to skilled personnel, and are furthermore bulky, uncomfortable and anti-aesthetical.

In particular, document GB 1 564 047 shows a thermostatic regulating valve comprising a thermostatic actuator unit and a valve housing. The actuator unit comprises a control knob, rotatable relative to a connecting union, that connects the actuator unit to the valve housing, to set a desired temperature value. The thermostatic valve comprises also a clamped safety device that blocks the knob against rotation to prevent changes of the desired temperature by unauthorized people.

Another kind of drawback consists in that the thermostat is generally badly coupled with the knob, also due to inaccuracies in the working of the reciprocally facing surfaces of the thermostat and of the knob, at least one of which generally shows a raw finishing degree. That is why the aforesaid surfaces are in contact with each other only in few points. This results in the presence of some air between the knob and the thermostat; this air layer enclosed between the two elements acts as thermal insulator and can therefore highly slow down the reaction times of the thermostat with respect to the variation of outside temperature in case the latter works though an inner sensor. The solutions generally known provide for some openings in the knob shell, which should lead outside air in direct contact with thermostat and therefore result in a fast reaction of thermostat whenever outside temperature changes. Said solutions do not ensure a safe result whereas they allow dust to pile up between knob and thermostat.

The Applicant has now found a way to overcome these difficulties by modifying the thermostatic head by means of a blocking device that is simple, cheap, easy to be operated and that does not modify the usual aesthetic appearance of known thermostatic heads, so that it is difficult to be recognized by unskilled personnel, and that can keep unchanged the reference position of the thermostatic head with respect to the support (pipe) on which it is mounted. Moreover, a thermostatic head according to the invention is particularly compact and small.

The object of the present invention is therefore a thermostatic head as claimed in the enclosed claims 1 and 17 and in the dependant claims.

Further characteristics and advantages of the invention will be more evident from the detailed description of a thermostatic head according to the present invention, hereinafter disclosed with reference to the enclosed drawings, provided to a merely indicative and therefore non-limiting purpose, in which:
- Figure 1 shows a perspective view of the thermostatic head according to the invention;
- Figures 2 and 3 show a side view of the thermostatic head of Figure 1 according to two orthogonal directions one with respect to the other;
- Figure 4 shows a straight section of the thermostatic head according to the invention according to plane IV-IV of Figure 2;
- Figure 5 shows a straight section of the thermostatic head according to the invention according to plane V-V of Figure 3, with the blocking device according to the invention in passive position;
- Figure 6 shows a straight section of the thermostatic head according to the invention according to plane VI-VI of Figure 3, with the blocking device of Figure 5 in operating position;
- Figure 7 shows a straight section of the supporting sleeve of the thermostatic head according to the invention according to plane VII-VII of Figure 8, with a portion of the blocking device in a specific embodiment highlighted;
- Figure 8 shows a plan view of the sleeve of Figure 7 on the section plane VIII-VIII of Figure 7;
- Figure 9 shows a perspective view of the heat conduction device according to the invention in a first embodiment;
- Figure 10 shows a plan view of the device of Figure 9;
- Figure 11 shows a profile view of the device of Figure 9;
- Figure 12 shows a straight section of the device of Figure 9 according to plane IX-IX of Figure 10;
- Figure 13 shows a second embodiment of the heat conduction device according to the invention.

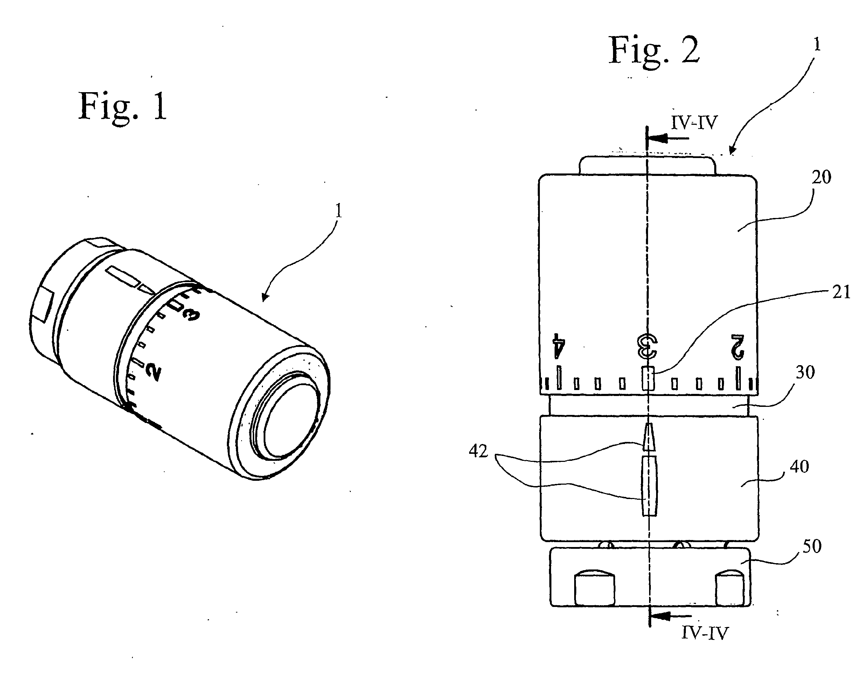

The thermostatic head according to the invention is hereinafter described with particular reference to the embodiment of a thermostatic head to be used in fluidodynamic systems, in particular heating systems, for controlling the water flow in a pipe, though the invention can also apply to all thermostatic heads, and more generally to all mechanisms rotating around their own axis, which require an anti-tampering device ensuring the block of the rotation that is reliable, cheap and easy to be operated. With reference to Figures 1 to 7, the thermostatic head 1 according to the invention substantially comprises, in a per se known way, a tubular body 30 to be coupled with a support sleeve 40, to be coupled in its turn with a ring nut 50 fastened to the system to be controlled, and more particularly to the pipe (not shown) whose flow has to be regulated. The coupling between the tubular body 30 and the sleeve 40 is preferably carried out by screwing the tubular body into the sleeve by means of a helical threading 31 obtained on corresponding facing surface portions of the tubular body and of the sleeve.

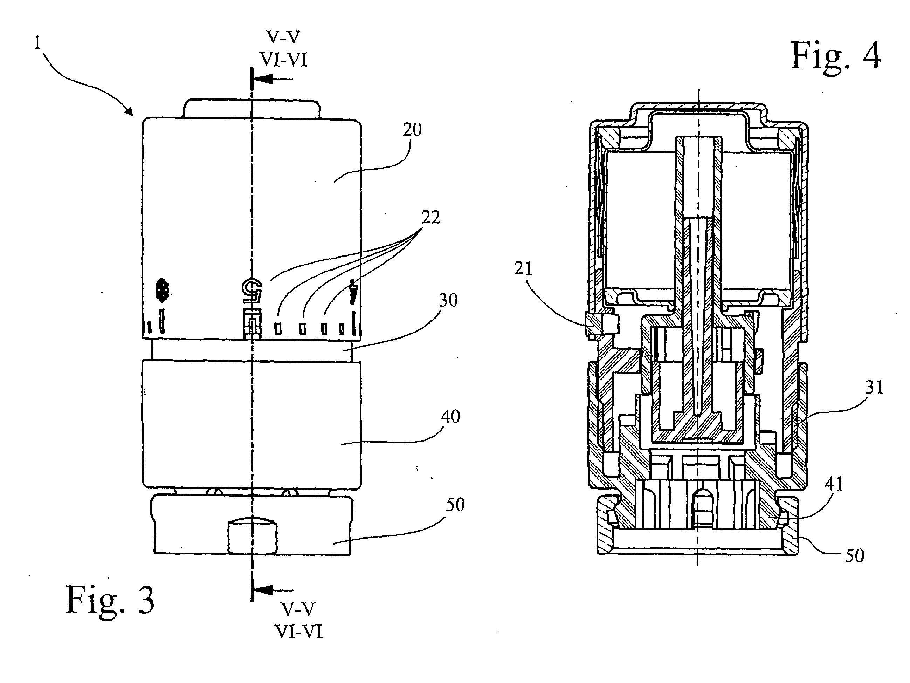

The coupling between the sleeve 40 and the ring nut 50 can be carried out in any suitable way: as a mere example, Figures 4-6 show a fast coupling obtained with elastic teeth 41 axially projecting from said sleeve to be introduced into said ring nut 50 and secured by the latter by coupling between corresponding conical surfaces.

A thermostatic motor 11, hereinafter simply referred to as thermostat, is fitted (Figures 4-6) into the tubular body 30 on the opposite end with respect to the sleeve 40: said thermostat has a central axial channel in which a safety cartridge 12 is mounted. The aforesaid cartridge 12 substantially comprises a support tubular element 13 housed in the aforesaid channel and projecting from the latter on the end facing the sleeve. On said end the tubular element 13 is integral with a drum 14 housing a cup 15 axially sliding in both senses with respect to the drum, though preferably integral during rotation with said drum. The outer side surface of said cup 15 is provided with check teeth 19, which keep together the safety cartridge and prevent the separation of the cup 15 from the drum 14.

From the base surface of the cup a piston 16, whose free end fits into the channel of the tubular element 13 and slides axially within the latter whenever the reciprocal axial position of drum and cup changes, projects axially towards the channel of the thermostat. The telescopic container consisting of the drum-cup assembly contains a coil spring 17 placed around the piston 16, whose ends abut respectively against the inner surface of the drum and the corresponding facing inner surface of the cup. Said spring 17 should prevent the elements of the thermostatic head and of the shutter from being damaged when during summer the thermostatic head is left in a position of maximum closing and the thermostat pushes excessively against the stem 18.

The outer basic surface of the cup is connected with an end of a stem 18 coaxial with the thermostat; the opposite end of said stem 18 acts onto the shutter (not shown) arranged on the pipe (not shown) whose flow has to be regulated.

The working of the safety cartridge can be easily inferred: whenever the signal detected by the thermostat changes the support element 13, together with the drum 14, moves axially with respect to the thermostat trailing the cup 15 thanks to the spring, when the shifting is directed towards the shutter, whereas when the shifting is directed away from the shutter, the cup 15 is pushed towards the thermostat by a suitable return spring (not shown in the figures) acting onto the stem 18. Said return spring exerts a smaller thrust than the spring 17 and therefore only pushes the cartridge 12 towards the thermostat when the latter stops acting onto the cartridge 12 for closing the shutter.

On the opposite end with respect to the one connected to the sleeve the tubular body 30 is closed by a cap 20, hereinafter referred to as knob, placed as an outside protection for the thermostat (Figures 1 and 4-6) and used in order to simplify the rotation of the tubular body with respect to the sleeve. To this purpose the knob is made integral with the tubular body in any suitable way, for instance by interference or by gluing, though preferably through a blocking pin 21 introduced with a trip mechanism, for instance through elastic portions, in a corresponding hole (Figure 4) obtained in the walls of the knob and of the tubular body so as to secure in a safer way the tubular body and the knob.

Suitably, an indicator 42 is provided on the outer surface of the sleeve, whereas the outer surface of the adjacent edge of the knob is provided with a scale 22 with reference numbers for the various positions of the tubular body with respect to the sleeve, for instance 0 (tubular body completely in) to 5 (tubular body completely out) with several intermediate positions.

Suitably, the position of the blocking pin 21 can coincide with the position of one of said numbers, so that the pin can be a projecting indicator for a specific operating position of the thermostat, for instance, as in the case shown in Figure 2, the standard position referred to with 3, corresponding for instance to a room temperature of 20°C. This way of using the pin makes it hard to be identified as the blocking element between knob and tubular body.

The axial position of the thermostat within the knob and, respectively, of the tubular body is preferably secured through spacing means, for instance a washer 23 introduced between the base surface of the knob and the corresponding facing surface of the thermostat.

From the preceding explanations it can be easily inferred that the relative rotation of the tubular body with respect to the sleeve shifts axially the safety cartridge associated to the thermostat and the free end of the stem 18 between a position of maximum distance from the shutter (for instance completely open shutter) and a position of minimum distance from the shutter (for instance completely closed shutter), so as to determine the maximum water flow rate the thermostat can define. In every position, both the two extreme positions and the intermediate ones, whenever the signal received changes the thermostat enables a small shifting of the stem 18 around the reference position set by the knob.

In order to prevent an unwanted shifting of this reference position, according to the invention the thermostatic head comprises interference means 32, 43 for blocking the relative rotation between sleeve and tubular body; these means substantially comprise first blocking means 32 associated inside to said tubular body, and second blocking means 43 associated inside to said sleeve, which can be alternatively associated and dissociated one with respect to the other for activating and de-activating the aforesaid block of the rotation, respectively. Said first blocking means 32 comprise at least an element moving between two positions, respectively a passive rest position and an operating position interfering with said second blocking means 43, which can be handled through an opening 34 obtained in the head.

In a preferred embodiment of the invention said moving element is defined by an elongated element 32, for instance prism-shaped, associated to said tubular body and sliding longitudinally with respect to the latter within a suitable seat obtained in said body, axially shifting in both senses, parallel to the axis of said body, between two positions, respectively a rest position (passive) and an interference position (operating) with said second blocking means 43. The aforesaid elongated element has an operating end, i.e. the one interfering with the second blocking means 43, and a control end, i.e. the one axially opposed to the operating end. Preferably, said elongated element is carried out by means of a bar 32 with any suitable straight section: in a preferred embodiment the operating end of said bar has a straight section chosen among the circular, triangular, square, rhombic trapezoidal and rectangular section, preferably rectangular section.

Preferably, the seat in which the bar 32 slides is obtained in a projection 33 radially protruding from the inner surface of the tubular body and directed towards the axis of said body.

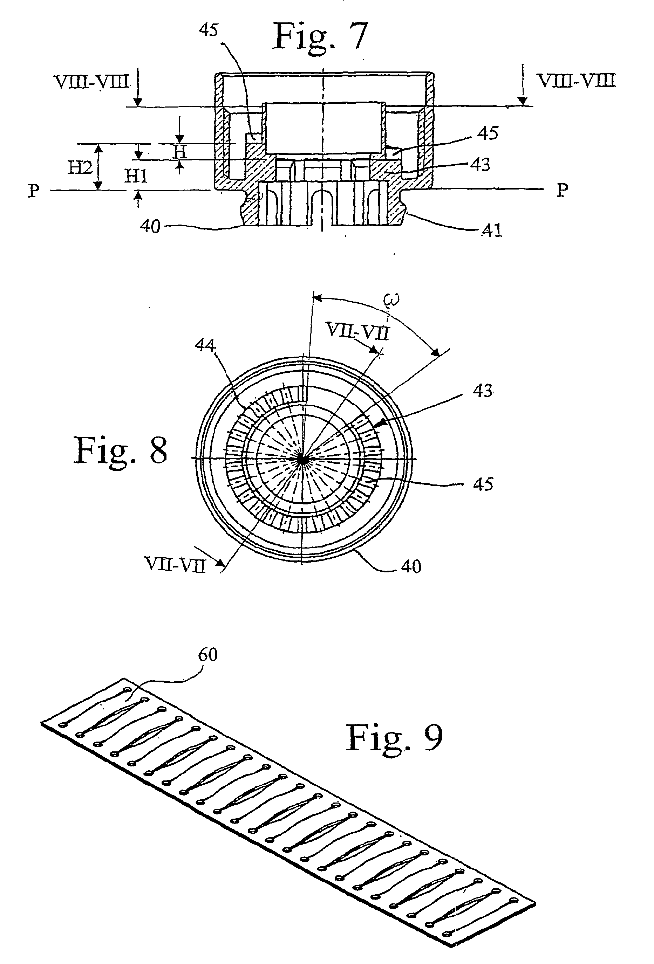

Said second blocking means 43 preferably comprise (Figure 7) a ring-shaped projection 43 axially protruding from the inner base surface of said sleeve towards said tubular body.

The surface of said ring-shaped projection facing the tubular body is shaped as a circular crown 44; the surface of said circular crown 44 is provided on at least a portion of its circular profile with elements interfering with the operating end of the elongated prism-shaped element, in particular with the adjacent end of the bar 32.

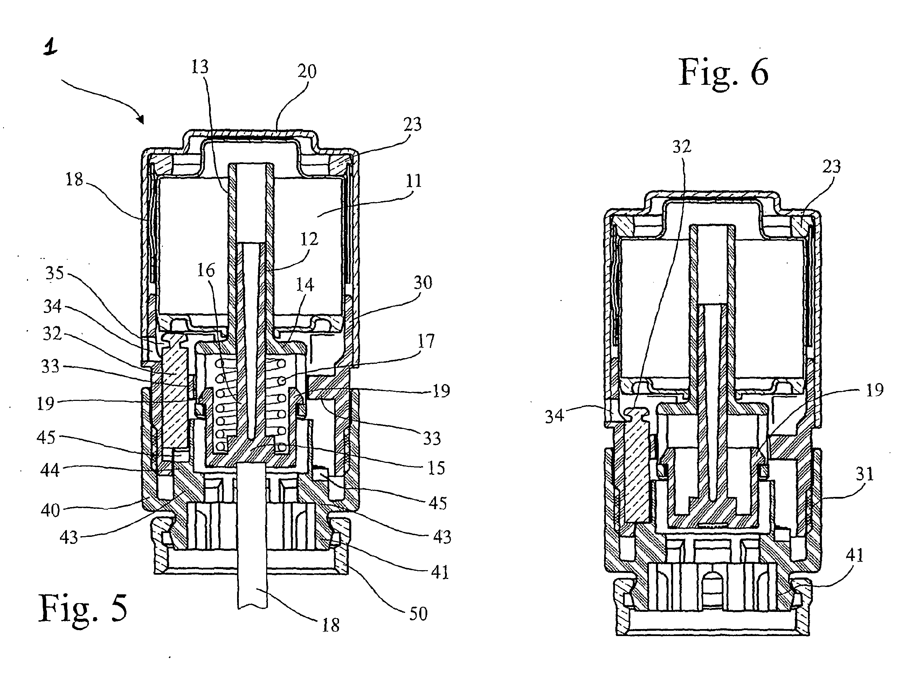

Preferably, said elements comprise a plurality of teeth 45 axially projecting from the surface of said crown, spaced on their circumference one with respect to the other by a space corresponding to the circumferential profile of the end of said bar 32: in other words, when the bar 32 is brought to its interference position (Fig. 6) its operating end is introduced between a pair of adjacent teeth 45, thus blocking the rotation of the tubular body with respect to said sleeve.

Alternatively, the surface of the circular crown could be provided with a plurality of axial blind holed, substantially having the same straight section as the end of the bar 32, so that the operating end of said bar in its interference position is introduced into one of said holes, thus blocking any rotation of the tubular body with respect to said sleeve.

According to a different embodiment of the invention the operating end of said bar has a knurled surface, so as to be engaged against the similarly knurled surface of the circular crown, so that their reciprocal engagement prevents any relative circular shifting between the two elements in contact. Through these data, which show the result to be achieved by reciprocally coupling said first and second blocking means, the skilled technical will not find it difficult to carry out other different though equivalent blocking devices achieving the desired result.

Advantageously, the elongated element 32 is mounted within the tubular body; in this case the shifting of the bar 32 from its passive to its operating position, and conversely, is preferably driven by the outside of the thermostatic head through the opening 34 obtained within the head, defined by a hole passing through the wall of the knob and through the adjacent wall of the tubular body, in such a position as to make the control end of the bar 32 accessible from outside. Thus, through said hole it is possible to act with a suitable tool, for instance with a small screwdriver, onto a suitable hooking device obtained on the control end of the bar 32, shifting said bar alternatively between the two aforesaid positions. The aforesaid hooking device can comprise a groove 35 obtained along the peripheral profile of the side surface of said elongated prism-shaped element, or a notch or a hole, either a blind or through hole, obtained in the thickness of said element, and more particularly of said bar. Preferably, the surface of the circular crown according to the invention develops on the same inclined plane (Figures 4-7) as the axis of the sleeve, so as to have in two diametrically opposite points, respectively, a minimum H1 and a maximum H2 distance from any plane P-P perpendicular to the axis of the sleeve. The difference h (h = H2-H1) between the values of said distances corresponds to the maximum axial range of the tubular body along the sleeve.

More preferably, said circular crown develops along an helical trajectory comprising only one coil, and still more preferably it has an interruption on the two ends of said coil. Said interruption (Figure 8) covers an angle w preferably of 15° and 45°, through still more preferably not above 30°.

It seems evident that, if the circular crown develops on the same inclined plane, the total axial range of the tubular body with respect to the sleeve is carried out with a rotation of said body not above 180°. Conversely, when the circular crown develops on a helical trajectory, the total axial range of the tubular body with respect to the sleeve can be spread on a rotation of said body of 315 to 360°, preferably of about 330°.

In this case the surface of the circular crown 44 has minimum H1 and maximum H2 distances from the same plane P-P respectively on the two ends of the helix, i.e. in two adjacent points on the circumference, separated one with respect to the other by an angle preferably corresponding to the angle w.

The development of the circular crown on an inclined plane, or a helical surface, enables to keep unchanged the stroke of the bar 32 in any position of the tubular body with respect to the sleeve, since the axial shifting of said body with respect to the sleeve is recovered by the inclination of the crown surface. Conversely, when the crown surface, according to a different and less convenient embodiment of the invention, lies on a plane perpendicular to the sleeve axis, this shifting requires a longer stroke of the bar, with obvious construction complications concerning the thermostatic head.

It is also evident that any angular rotation of the sleeve during assembly, and of the tubular body thereto connected, with respect to the ring nut 50 does not alter the axial position of the tubular body with respect to said ring nut; in particular, the axial position of the free end of the stem 18 with respect to the shutter of the pipe controlled by the thermostatic head according to the invention is unchanged.

It should be further pointed out that the sleeve cannot rotate since it is provided with a hexagonal seat fitted into a corresponding hexagonal portion of a connection element (not shown in the figure) in which the stem 18 of the shutter slides and which is fastened to the system on which the thermostatic head is mounted.

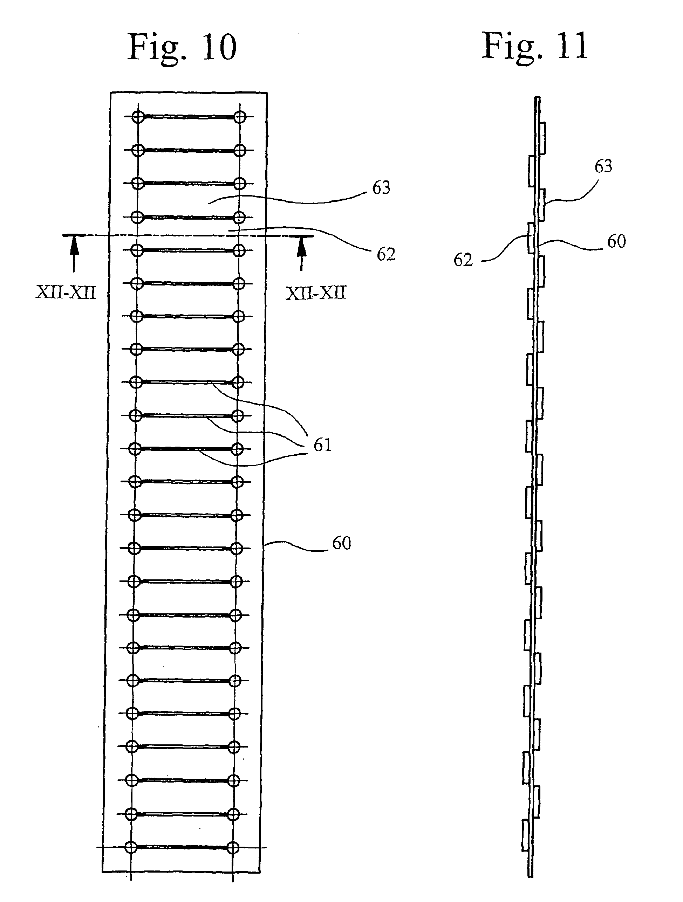

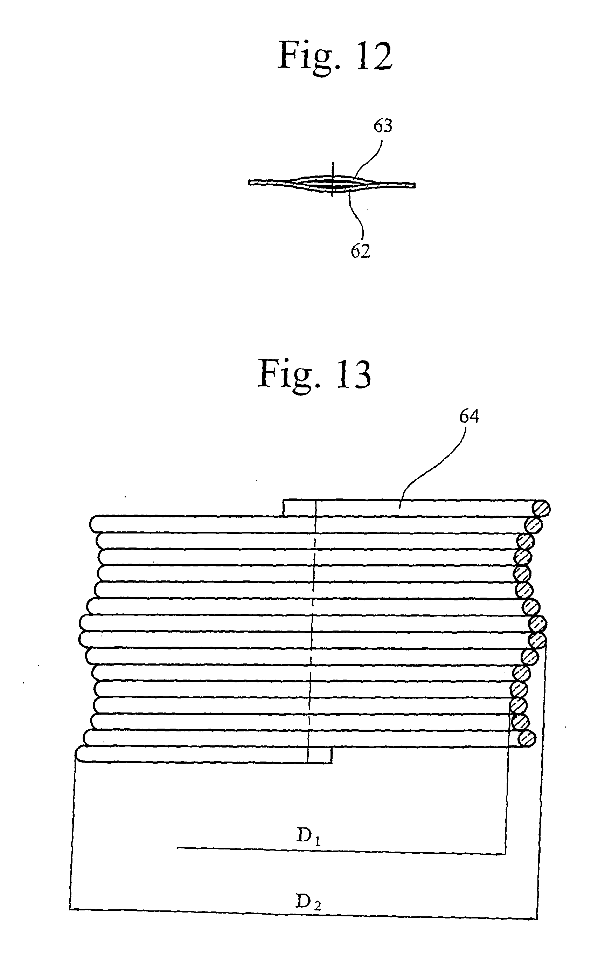

Still according to the invention the thermostatic head further comprises heat conduction means for optimizing the contact between the inner surface of the knob and the outer surface of the thermostat. In a preferred embodiment of the invention the aforesaid means comprise (Figure 9) an elastic metal strip 60, provided with a plurality of cuts 61 (Figure 10) transversal with respect to the profile of said strip, in which the surfaces 62 and 63 included between three consecutive cuts are alternatively folded in opposite direction (Figures 11 and 12) perpendicularly to the longitudinal profile of the strip. Said strip is shaped as a tube or as a cylinder and is fitted laterally onto the thermostat, between the thermostat and the knob. The surfaces warped in opposite direction ensure a permanent contact along a quite wide surface between the body of the knob and of the thermostat, thus ensuring an optimal heat transmission between the two bodies.

In a different embodiment of the invention said means comprise a coil spring 64, preferably not cylindrical, with a variable circular section, fitted onto the thermostat and arranged between the thermostat and the knob, which ensures a continuous contact simultaneously with the knob and with the thermostat. As a matter of fact, preferably, the radius of the circular section of said spring varies from D1 corresponding to the outer radius of the thermostat and D2 corresponding to the inner radius of the knob.

The working of the device according to the invention is now easy to understand.

First of all, the tubular body 30 is screwed onto the sleeve 40, then the bar 32 and the thermostat 11, with the safety cartridge fitted therein, are mounted into the tubular body 30.

It should be pointed out that the bar 32, once mounted, prevents the separation of the tubular body 30 from the sleeve, since at a given stroke end it cooperates with an end of the circular crown 44 preventing the reciprocal rotation of tubular body and sleeve until separation.

The knob 20 is then mounted onto the tubular body 20, remembering to introduce before the spacer 23 with the spring 60 between the knob and the thermostat, the knob is then blocked on the tubular body by means of the pin 21. The knob and the tubular body are now integral one with the other during rotation.

The assembly sleeve-tubular body is now mounted into the sealing ring nut 50 on the system. The knob is turned until the tubular body has reached the desired position with respect to the sleeve, as indicated by the position of the scale with respect to the reference 42. By acting now through the hole 34 the bar 32 is now shifted to its operating position, thus blocking any relative rotation between tubular body and sleeve, by interference between the end of the bar 32 and the corresponding pair of teeth 45 on the circular crown 44.

The invention has important advantages.

The block of the relative rotation between tubular body and sleeve enables the set values to be kept constant, since any rotation of the knob, both unintentional and intentional, is prevented.

The access hole to the control end of the bar is very small, so that it will not be noted by those who are not skilled technicians, whereas the control of the bar for de-blocking the knob requires a thin tip introduced into the aforesaid hole, i.e. a tool occasional observers who want to tamper with the thermostatic head out of simple curiosity or in order to alter without permission its operating parameters, are not generally provided with.

The thermostatic head according to the invention is quite small, compact, elegant and reliable and efficiently hides the anti-tampering device it is equipped with. Furthermore, the heat conduction means it is equipped with make said thermostatic head according to the invention extremely sensible to ambient heat changes, minimizing intervention times necessary for updating the system conditions to the new situation, without substantially increasing its cost, weight, overall dimensions and structural complexity with respect to known thermostatic heads at the state of the art.

Eventually, also all those alternative embodiments of the invention that can be easily identified thanks to the present description of the relation between each specific embodiment and the result to be achieved, are to be regarded as similarly included in the protection framework of the present patent.

## Claims

1. Thermostatic head (1) for controlling a fluidodynamic system, comprising: a thermostatic motor (11) fastened to a tubular body (30) to be coupled with a support sleeve (40), coaxial with said body (30), said sleeve (40) having in its turn the possibility to be coupled with said system, said tubular body (30) rotating with respect to said sleeve (40) and being axially movable in both senses with respect to the latter for determining the maximum water flow rate the thermostat can define; interference means being provided on said head (1) so as to block said body (30) and said sleeve (40) one with respect to the other during rotation; **characterized in that** said interference means comprise first blocking means (32) associated inside the said tubular body (30), and second blocking means (43) associated inside the said sleeve (40), said first (32) and second (43) blocking means being selectively to be associated and dissociated one with respect to the other so as to activate and deactivate, respectively, said block during rotation, and **in that** said first blocking means (32) can be handled through an opening (34) obtained in the head (1).

2. Thermostatic head according to claim 1, **characterized in that** said first blocking means (32) comprise at least an element moving between two positions, respectively a passive rest position and an operating position interfering with said second blocking means (43).

3. Thermostatic head according to claims 1 or 2, **characterized in that** first blocking means (32) is an elongated element associated to said tubular body (30) and longitudinally sliding with respect to the latter, axially shifting in both senses, parallel to the axis of said body (30), between said two positions.

4. Thermostatic head according to claim 3, **characterized in that** said elongated element (32) has an operating end for interfering with said blocking means (43), and a control end in a position axially opposed to the one of the operating end.

5. Thermostatic head according to claims 3 or 4, **characterized in that** said elongated element (32) comprises a bar with said operating end having a straight section chosen in the group comprising circular, square, triangular, rhombic, trapezoidal and rectangular sections.

6. Thermostatic head according to claims 4 or 5, **characterized in that** said elongated element (32) has said control end with a hooking device (35) for forcedly activating said shift, alternatively in both senses, between passive and operating position, and conversely.

7. Thermostatic head according to claim 6, **characterized in that** the opening (34) is a through hole obtained in the side wall of said head (1) on the hooking device (35) of the control end of said elongated element (32), so that said control end is accessible from the outside of said thermostatic head (1).

8. Thermostatic head according to claim 4, **characterized in that** said second blocking means (43) comprise a ring-shaped projection axially protruding from the base surface of said sleeve (40) towards said tubular body (30), said ring-shaped projection having the surface facing said tubular body (30) shaped as a circular crown (44), provided with elements interfering with the operating end of said elongated element (32).

9. Thermostatic head according to claim 8, **characterized in that** said interference element comprise a plurality of teeth (45) axially projecting from the surface of said crown, spaced one with respect to the other on the circumference by a space corresponding to the circumferential profile of the operating end of said elongated element (32).

10. Thermostatic head according to claims 8 or 9, **characterized in that** said surface of the circular crown (44) develops on an inclined plane with respect to the axis of the sleeve (40), so as to have in two diametrically opposite points, respectively, a minimum H1 and a maximum H2 distance from any plane P-P perpendicular to the axis of the sleeve (40).

11. Thermostatic head according to claims 8, 9 or 10, **characterized in that** said surface of the circular crown (44) develops on a helical trajectory.

12. Thermostatic head according to any of the preceding claims, **characterized in that** said first blocking means (32) further cooperate with said second blocking means (43) for preventing the separation of said tubular body (30) from said support sleeve (40), thus defining a stroke end of the reciprocal rotation of the body (30) with respect to the support sleeve (40).

13. Thermostatic head according to any of the preceding claims, comprising a knob (20) fitted onto said tubular body (30), and heat conduction means (60) arranged on said head (1), for optimizing the heat exchange between said knob (20) and said thermostatic motor (11), **characterised in that** said heat conduction means (60) comprise a metal conductor element shaped as a tube, fitted onto the thermostatic motor (11), placed between said thermostat and said knob.

14. Thermostatic head according to claim 15, **characterized in that** said metal conductor element (60) comprises an elastic metal strip provided with a plurality of cuts (61) transversal with respect to the strip profile, the surfaces (62, 63) defined between three consecutive cuts (61) being alternatively folded in opposite directions perpendicularly to the longitudinal profile of the strip.

15. Thermostatic head according to claim 14, **characterized in that** said metal conductor element (60) comprises a coil spring (64) having a variable circular section, the radius of said circular section varying alternatively between D1, substantially corresponding to the outer radius of the thermostat, and D2, substantially corresponding to the inner radius of the knob (20).

16. Fluidodynamic system **characterized in that** it comprises a thermostatic head according to any of the preceding claims.

## Patentansprüche

1. Thermostatkopf (1) zur Steuerung eines Strömungssystems, umfassend: einen Thermostatmotor (11), der an einem röhrenförmigen Körper (30) zur Kopplung mit einer zum Körper (30) koaxialen Traghülse (40) befestigt ist, wobei die Hülse (40) wiederum mit dem System gekoppelt werden kann, wobei der röhrenförmige Körper (30) gegenüber der Hülse (40) dreht und in beiden Richtungen dazu zur Bestimmung der vom Thermostat definierbaren maximalen Wasserfördermenge axial beweglich ist; wobei am Kopf (1) Eingriffmittel vorgesehen sind, um den Körper (30) und die Hülse (40) zueinander beim Drehen zu sperren; **dadurch gekennzeichnet, daß** die Eingriffmittel erste Sperrmittel (32), die innerhalb dem röhrenförmigen Körper (30) verbunden sind, und zweite Sperrmittel (43), die innerhalb der Hülse (40) verbunden sind, umfasst, wobei die ersten (32) und zweiten (43) Sperrmittel mit- oder auseinander selektiv zu verbinden sind, um jeweils die Sperrung beim Drehen zu aktivieren und deaktivieren, und daß die ersten Sperrmittel (32) durch eine im Kopf (1) ausgeformte Öffnung (34) gesteuert werden können.

2. Thermostatkopf nach Anspruch 1, **dadurch gekennzeichnet, daß** die ersten Sperrmittel (32) mindestens ein Element umfassen, das sich zwischen zwei Stellungen bewegt, d.h. einer passiven Ruhestellung und einer Betriebsstellung, die mit den zweiten Sperrmitteln (34) eingreift.

3. Thermostatkopf nach Ansprüchen 1 oder 2, **dadurch gekennzeichnet, daß** das erste Sperrmittel (32) ein längliches Element ist, das mit dem röhrenförmigen Körper (30) verbunden ist und dazu längs läuft, wobei es sich in beiden Richtungen parallel zur Achse des Körpers (30) zwischen den beiden Stellungen verstellt.

4. Thermostatkopf nach Anspruch 3, **dadurch gekennzeichnet, daß** das längliche Element (32) ein Betriebsende zum Eingreifen mit den Sperrmitteln (43) und ein Steuerende in einer Stellung, die zur Stellung des Betriebsendes entgegengesetzt ist, aufweist.

5. Thermostatkopf nach Ansprüchen 3 oder 4, **dadurch gekennzeichnet, daß** das längliche Element (32) einen Stab mit dem Betriebsende, der eine gerade Schnittfläche aus der Gruppe umfassend Kreis-, Vierkant-, Dreieck-, Rauten-, Trapez- und Rechteckschnittflächen aufweist, umfasst.

6. Thermostatkopf nach Ansprüchen 4 oder 5, **dadurch gekennzeichnet, daß** das längliche Element (32) das Steuerende mit einer Kupplungsvorrichtung (35) zur Zwangsaktivierung der in beiden Richtungen abwechselnden Verstellung zwischen der passiven und der Betriebsstellung, und umgekehrt, aufweist.

7. Thermostatkopf nach Anspruch 6, **dadurch gekennzeichnet, daß** die Öffnung (34) ein Durchloch ist, das in der Seitenwand des Kopfes (1) an der Kupplungsvorrichtung (35) des Steuerendes des länglichen Elementes (32) ausgeformt ist, so daß das Steuerende von außen vom Thermostatkopf (1) zugänglich ist.

8. Thermostatkopf nach Anspruch 4, **dadurch gekennzeichnet, daß** die zweiten Sperrmittel (43) einen ringförmigen Vorsprung umfassen, der von der Grundfläche der Hülse (40) zum röhrenförmigen Körper (30) axial hinausragt, wobei der ringförmige Vorsprung die zum röhrenförmigen Körper (30) zugewandte Fläche als Kreiskranz (44) aufweist, die mit Elementen ausgestattet ist, die mit dem Betriebsende des länglichen Elementes (32) eingreifen.

9. Thermostatkopf nach Anspruch 8, **dadurch gekennzeichnet, daß** das Eingriffelement eine Vielzahl von Zähnen (45) umfasst, die von der Fläche des Kranzes axial hinausragen und am Umfang mit einem Abstand zueinander liegen, der dem Umfangsprofil des Betriebsende des länglichen Elementes (32) entspricht.

10. Thermostatkopf nach Ansprüchen 8 oder 9, **dadurch gekennzeichnet, daß** die Fläche am Kreiskranz (44) sich auf einer schiefen Ebene gegenüber der Achse der Hülse (40) entwickelt, um an zwei diametral entgegengesetzten Stellen jeweils einen minimalen H1 und einen maximalen H2 Abstand von irgendeiner Ebene P-P orthogonal zur Achse der Hülse (40) zu haben.

11. Thermostatkopf nach Ansprüchen 8, 9 oder 10, **dadurch gekennzeichnet, daß** die Fläche des Kreiskranzes (44) sich auf einem schraubenförmigen Weg entwickelt.

12. Thermostatkopf nach irgendeinem der vorherigen Ansprüche, **dadurch gekennzeichnet, daß** die ersten Sperrmittel (32) mit den zweiten Sperrmitteln (43) zum Verhindern der Trennung des röhrenförmigen Körpers (30) von der Traghülse (40) weiter zusammenwirken, wodurch ein Endanschlag der gegenseitigen Drehung des Körpers (30) gegenüber der Traghülse (40) definiert wird.

13. Thermostatkopf nach irgendeinem der vorherigen Ansprüche, umfassend einen Drehknopf (20), der am röhrenförmigen Körper (30) befestigt ist, und Wärmeleitungsmittel (60), die am Kopf (1) angeordnet sind, zur Optimierung des Wärmeaustausches zwischen dem Drehknopf (20) und dem Thermostatmotor (11), **dadurch gekennzeichnet, daß** die Wärmeleitungsmittel (60) ein Metallleitelement als Rohr umfassen, das am Thermostatmotor (11) befestigt ist und zwischen dem Thermostat und dem Drehknopf liegt.

14. Thermostatkopf nach Anspruch 15, **dadurch gekennzeichnet, daß** das Metallleitelement (60) einen elastischen Metallstreifen mit einer Vielzahl von Schnitten (61) umfasst, die quer zum Streifenprofil laufen, wobei die zwischen drei hintereinanderliegenden Schnitten (61) definierten Flächen (62, 63) in entgegengesetzten Richtungen orthogonal zum Längsprofil des Streifens abwechselnd gefaltet sind.

15. Thermostatkopf nach Anspruch 14, **dadurch gekennzeichnet, daß** das Metallleitelement (60) eine Schraubenfeder (63) mit einer veränderbaren Kreisschnittfläche umfasst, wobei der Radius der Kreisschnittfläche sich zwischen D1, wesentlich entsprechend dem Außenradius des Thermostats, und D2, wesentlich entsprechend dem Innenradius des Drehknopf (20), abwechselnd ändert.

16. Strömungssystem, **dadurch gekennzeichnet, daß** es einen Thermostatkopf nach irgendeinem der vorherigen Ansprüche umfasst.

## Revendications

1. Tête thermostatique (1) pour contrôler un système fluido-dynamique, comprenant: un moteur thermostatique (11) fixé à un corps tubulaire (30) pouvant être couplé avec un manchon de support (40), coaxial audit corps (30), ledit manchon (40) pouvant être à sa fois couplé avec ledit système, ledit corps tubulaire (30) tournant par rapport audit manchon (40) et étant axialement déplaçable dans les deux directions par rapport à ce dernier pour déterminer le débit d'eau maximum que le thermostat peut définir; des moyens d'engagement étant prévus sur ladite tête (1) afin de bloquer ledit corps (30) et ledit manchon (40) l'un par rapport à l'autre pendant la rotation; **caractérisée en ce que** lesdits moyens d'engagement comprennent des premiers moyens de blocage (32) associés à l'intérieur dudit corps tubulaire (30), et des deuxièmes moyens de blocage (43) associés à l'intérieur dudit manchon (40), lesdits premiers (32) et deuxièmes (43) moyens de blocage pouvant être associés et détachés de façon sélective l'un par rapport à l'autre respectivement pour activer ou désactiver ledit blocage pendant la rotation, et **en ce que** lesdits premiers moyens de blocage (32) peuvent être manipulés à travers une ouverture (34) obtenue dans la tête (1).

2. Tête thermostatique selon la revendication 1, **caractérisée en ce que** lesdits premiers moyens de blocage (32) comprennent au moins élément se déplaçant entre deux positions, respectivement une position de repos passive et une position de travail interagissant avec lesdits deuxièmes moyens de blocage (43).

3. Tête thermostatique selon les revendications 1 ou 2, **caractérisée en ce que** ledit premier moyen de blocage (32) est élément allongé associé audit corps tubulaire (30) et glissant longitudinalement par rapport à ce dernier, se déplaçant axialement dans les deux directions, parallèlement à l'axe dudit corps (30), entre lesdites deux positions.

4. Tête thermostatique selon la revendication 3, **caractérisée en ce que** ledit élément allongé (32) présente une extrémité de travail pour interagir avec lesdits moyens de blocage (43), et une extrémité de contrôle dans une position axialement opposée à celle de l'extrémité de travail.

5. Tête thermostatique selon les revendications 3 ou 4, **caractérisée en ce que** ledit élément allongé (32) comprend une barre avec ladite extrémité de travail ayant une section droite choisie dans le groupe comprenant des sections circulaires, carrées, triangulaires, rhombiques, trapézoïdales et rectangulaires.

6. Tête thermostatique selon les revendications 4 ou 5, **caractérisée en ce que** ledit élément allongé (32) présente ladite extrémité de contrôle avec un dispositif d'accrochage (35) pour activer de manière forcée ledit déplacement, alternativement dans les deux directions, entre la position active et passive, et vice-versa.

7. Tête thermostatique selon la revendication 6, **caractérisée en ce que** l'ouverture (34) est un trou passant obtenu dans la paroi latérale de ladite tête (1) sur le dispositif d'accrochage (35) de l'extrémité de contrôle dudit élément allongé (32), de sorte que ladite extrémité de contrôle soit accessible de l'extérieur de ladite tête thermostatique (1).

8. Tête thermostatique selon la revendication 4, **caractérisée en ce que** lesdits deuxièmes moyens de blocage (43) comprennent une saillie annulaire saillant axialement de la surface de base dudit manchon (40) vers ledit corps tubulaire (30), ladite saillie annulaire ayant la surface en face dudit corps tubulaire (30) en forme d'une couronne circulaire (44), munie d'éléments interagissant avec l'extrémité de travail dudit élément allongé (32).

9. Tête thermostatique selon la revendication 8, **caractérisée en ce que** ledit élément d'engagement comprend une pluralité de dents (45) saillant axialement de la surface de ladite couronne, espacées l'une par rapport à l'autre sur la circonférence par un espace correspondant au profil de circonférence de l'extrémité de travail dudit élément allongé (32).

10. Tête thermostatique selon les revendications 8 ou 9, **caractérisée en ce que** ladite surface de la couronne circulaire (44) se développe sur un plan incliné par rapport à l'axe du manchon (40), de sorte à avoir dans deux points diamétralement opposés respectivement une distance minimale H1 et maximale H2 de tout plan P-P perpendiculaire à l'axe du manchon (40).

11. Tête thermostatique selon les revendications 8, 9 ou 10, **caractérisée en ce que** ladite surface de la couronne circulaire (44) se développe sur une trajectoire hélicoïdale.

12. Tête thermostatique selon une quelconque des revendications précédentes, **caractérisée en ce que** lesdits moyens de blocage (32) coopèrent aussi avec lesdits deuxièmes moyens de blocage (43) pour empêcher la séparation dudit corps tubulaire (30) dudit manchon de support (40), définissant ainsi une butée d'arrêt de la rotation réciproque du corps (30) par rapport au manchon de support (40).

13. Tête thermostatique selon une quelconque des revendications précédentes, comprenant une poignée (20) montée sur ledit corps tubulaire (30), et des moyens de conduction thermique (60) placés sur ladite tête (1), afin d'optimiser l'échange thermique entre ladite poignée (20) et ledit moteur thermostatique (11), **caractérisée en ce que** lesdits moyens de conduction thermique (60) comprennent un élément conducteur métallique en forme de tuyau, monté sur le moteur thermostatique (11), placé entre ledit thermostat et ladite poignée.

14. Tête thermostatique selon la revendication 15, **caractérisée en ce que** ledit élément conducteur métallique (60) comprend une bande métallique élastique munie d'une pluralité de coupures (61) transversales par rapport au profil de la bande, les surfaces (62, 63) définies entre trois coupures (61) consécutives étant pliées alternativement dans des directions opposées perpendiculairement au profil longitudinal de la bande.

15. Tête thermostatique selon la revendication 14, **caractérisée en ce que** ledit élément conducteur métallique (60) comprend un ressort hélicoïdal (64) ayant une section circulaire variable, le rayon de ladite section circulaire variant alternativement entre D1, correspondant substantiellement au rayon extérieur du thermostat, et D2, correspondant substantiellement au rayon intérieur de la poignée (20).

16. Système fluido-dynamique **caractérisé en ce que** il comprend une tête thermostatique selon une quelconque des revendications précédentes.
